Europäisches Patentamt

(19) European Patent Office

Office européen des brevets

(11) Publication number : **0 366 774 B1**

# (12) EUROPEAN PATENT SPECIFICATION

(45) Date of publication of patent specification :
07.04.93 Bulletin 93/14

(51) Int. Cl.⁵ : **A23C 15/06, A01J 15/10**

(21) Application number : 89905807.7

(22) Date of filing : 05.05.89

(86) International application number :
PCT/SE89/00256

(87) International publication number :
WO 89/10700 16.11.89 Gazette 89/27

(54) METHOD AND PLANT FOR PRODUCTION OF A FAT PRODUCT BASED ON MILK FAT.

(30) Priority : 09.05.88 SE 8801743

(43) Date of publication of application :
09.05.90 Bulletin 90/19

(45) Publication of the grant of the patent :
07.04.93 Bulletin 93/14

(84) Designated Contracting States :
DE FR GB IT NL SE

(56) References cited :
DE-B- 1 767 049
FR-A- 2 493 100
US-A- 1 977 927
US-A- 2 461 117
US-A- 4 209 546

(73) Proprietor : ALFA-LAVAL FOOD
ENGINEERING AB
P.O. Box 64
S-221 00 Lund (SE)

(72) Inventor : ANDERSSON, Kenneth
BI vingevägen 29
S-240 17 S. Sandby (SE)

(74) Representative : Lerwill, John et al
A.A. Thornton & Co. Northumberland House
303-306 High Holborn
London, WC1V 7LE (GB)

## Description

The present invention relates to a method and a plant for production of a fat product based on milk fat.

Butter is produced from cream which is pressurised, after which the cream is subjected to a controlled temperature treatment (ripening) during 12-15 hours. If the produced product is to be a soured cream butter, starting culture is added prior to the temperature treatment. From the ripening tank the cream is pumped to a butter churn or to a continuous buttering machine. During the churning process the fat drops collect to butter grains. The cream divides into two fractions, butter grains and butter milk. The butter milk has usually a fat content of 0.6%.

Within AB Separator a method was developed in the 1940's for producing butter from highly concentrated cream without any churning step. According to this method which is to be seen among others in the Swedish patent publication 132 061 the highly concentrated cream is subjected to phase reversal by cooling during the mixing. A number of plants were sold, but the method was abandoned after some time since there were problems with the consistency of the butter. At that time it was not possible to produce bacterially soured butter according to this method. The structure of the butter was hard, sliced and there was no mouth feel of butter. When studying the butter in a microscope large differences between churned butter and butter produced according to the method mentioned above were also found.

On the market today there are different fat products which consist of mixtures of milk fat and vegetable fat. Such a product is "Bregott" (registered trade mark) which is produced according to a traditional butter making technique. Sour or sweet cream and vegetable oil are mixed in certain proportions prior to the churning, which takes place in a churn or in a butter machine. Such a method is disclosed in GB-A-1217395. The fat losses in the buttermilk which is a by-product of the churning process are somewhat higher than when producing butter, and are around 1.2% of the total amount of fat in the mixture of cream and vegetable oil. The amount of vegetable oil, which is used in "Bregott" depends on the iodine value of the cream. The iodine value is a measure of the amount of unsaturated fatty acids in the milk and varies between the seasons of the year and with the geographic location. The iodine value in "Bregott" is usually 55-56 if unhardened soy bean oil is used as a vegetable oil. The amount of soy bean oil is then 20-30% of the total amount of fat. The amount of vegetable fat may not be higher without risk of damage to the product quality.

The amount of fat that is left in the butter milk when producing "Bregott" may seem unimportant but represents in a plant of middle size hundreds of thousands of Swedish crowns.

On the market there is also another kind of fat product containing milk fat and vegetable oils, but this product is produced by mixing butter oil with vegetable oil and emulgators. In butter oil the fat is present as a homogeneous liquid phase in contrast to butter where the fat is present in the form of fat drops surrounded by membranes and also in the form of free fat. Such a product is known as LÄTT & LAGOM (registered trade mark) and the method of producing such a product is disclosed in GB-1455146.

The present invention proposes a method and a plant for producing a fat product which is more economic than the known "Bregott" process. The method of the invention avoids churning, as did the method from the 1940's, but it is commercially viable having new advantages without the drawbacks of the earlier method.

In accordance with the invention there is provided a method for production of a fat product based on milk fat, wherein cream is concentrated to a fat content of 60 to 85% fat, at a temperature of 50 to 70°C, the concentrated cream is cooled to a temperature of 15 to 30°C, the cooled concentrated cream being stored for such a long time that the milk fat starts to crystalize, vegetable oil in an amount calculated to at least 25% of the amount of fat in the end product is added to the cooled concentrated cream, and phase reversal is carried out at a temperature of 8 to 15°C and is achieved without churning by cream and vegetable oil mixture being cooled in at least two steps with gentle working between the cooling steps, the entire mixture being converted into fat product which is packaged.

The maximal amount of vegetable oil when carrying through the method according to the invention is suitably 50% of the amount of fat in the end product.

In this way a fat product is obtained which contains butter and has the advantages of butter as regards taste and aroma but in contrast to conventional butter is more healthy and also spreadable at refrigerator temperatures. A fat product produced according to the method of the invention comprises fats with a high amount of unsaturated fatty acids, which is preferable from a nutrition point of view.

The iodine value of the obtained fat product should preferably be between 58-70, with advantage 62-66. If the used oil is soy bean oil this means that between 25 and 40% of the fat in the fat product consists of oil. Within the desired limits for the iodine value of the fat product the amount of vegetable oil will be 5-10% higher than the amounts in the traditionally produced "Bregott".

If other oils with other iodine values are used, for example rape seed oil, turnip oil, palm oil or sunflower oil, the iodine value in the obtained fat product will vary with the chosen oil. The different oils have different melting points and the selected amount of oil will depend on the influence of the oil on the consistency and spreadability of the fat product. The iodine value of the vegetable oil influences the amount of unsaturated fatty acids into the fat product such that the higher the content of unsaturated fatty acids in the oil the higher the content in the fat product will be and a better product with a higher nutritional value will be obtained.

The method according to the invention is with advantage carried through in such a way that the addition of vegetable oil takes place in two steps. At that 70-90% of the vegetable oil is added in a first step and 10-30% in a second step.

The fact that a product of high quality may be obtained in the manner described above is due to the fact that the production takes place under carefully controlled forms regarding the storing prior to the phase reversal and the conditions during the same time.

The phase reversal is carried through at a temperature of 8-15°C in scraper coolers and pin rotors.

The phase reversal preferably takes place by cooling and gently working in at least two steps. In the first step the mixture is cooled from 18-24°C to 12°C, at which temperature the mixture is worked carefully. The phase reversal is started and at the same time still more fat crystallises. During the crystallisation heat is given off and the working also adds some heat. The temperature of the mixture rises ~2°. In the second step of the cooling the mixture is cooled to 8-10°. Some further crystals are formed and heat is given off. The end temperature will be ~1°C higher than the temperature after the cooling step. A plant for production of a fat product based on milk fat starting from highly concentrated cream comprises a cooler to cool cream to a temperature of 15-30°C, a tank for storing the highly concentrated cream, a device for mixing the highly concentrated cream with vegetable oils, salt and aroma substances, a phase reversal unit comprising means for cooling and mixing of the mixture and a packaging plant.

The plant is with advantage designed such that the cooler consists of a plate heat exchanger, in which the cream is cooled with water and the tank which is used for storing of the concentrated cream is usually provided with water cooling. The phase reversal unit usually comprises two cooling steps, which each consists of one or more cooling drums and one or more pin rotors, which units are connected in series.

The invention is described further with reference to the attached drawings in which:

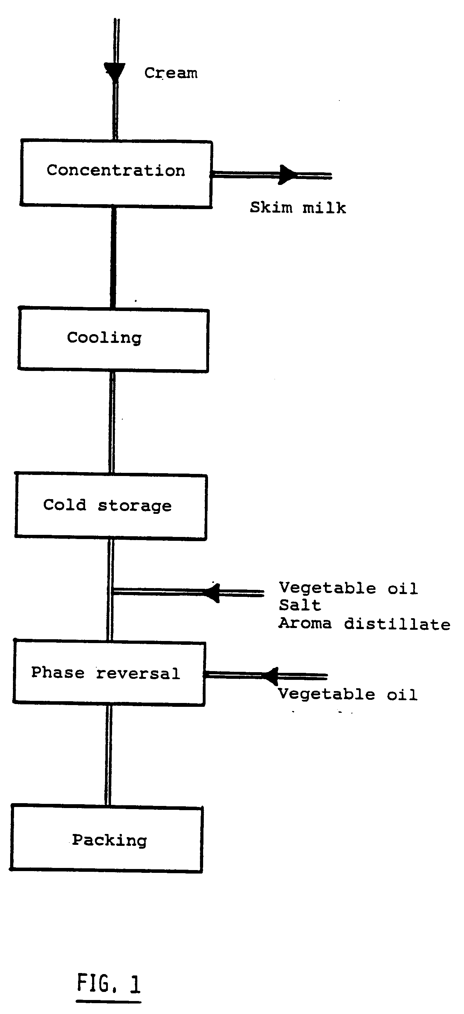

Fig. 1 shows a flow chart for production of a fat product chosen as an example, which fat product contains milk fat and vegetable oil; and

Fig. 2 shows schematically the process conditions during the phase reversal in the exemplary process.

Cream with a fat content between 30-50% which is high pasteurised (80-115°C) is concentrated to a fat content of 60-85% fat. The concentration usually takes place in a centrifugal separator, but may also take place by membrane separation. After the concentration the fat content of the cream is controlled and the cream is standardised to a desired value (by addition of skim milk). If the concentration takes place by way of centrifugal separation the cream has suitably a temperature of 50-70°. The concentrated cream is cooled to a temperature of 15-30°C by flowing concurrently in tube or plate heat exchangers with water as a cooling medium. After the cooling the cream is stored during such a long time that the milk fat starts to crystallise. When the storing time exceeds 4 hours the storage tank is with advantage water cooled in order to secure that the temperature is kept sufficiently low. Usually the cream is stored up to 20 hours. During the storing a partial crystallisation of the milk fat takes place. The temperature during the storing depends on the fat content of the milk. At a given temperature the risk of spontaneous phase reversal increases with the fat content of the cream. The temperature must consequently be adjusted such that the risk for spontaneous phase reversal is as little as possible. After the storing the cream is pumped further to be subjected to mechanical working during cooling in order to achieve a phase reversal.

Prior to this treatment the cream is mixed with unhardened, vegetable oil of a desired kind. The mixing may take place by injection of the oil by way of dosing pumps of a suitable kind in the pipes leading to the phase reversible unit or by mixing the oil and the cream in a mixing tank. Usually soy bean oil is used, but other oils may also be used as for example rape seed oil, turnip seed oil, and sunflower oil as well as mixtures of these oils. To the cream there is also added a culture destillate which gives the end product a character of bacteriologically soured butter. The addition of vegetable oil with advantage takes place in two steps.

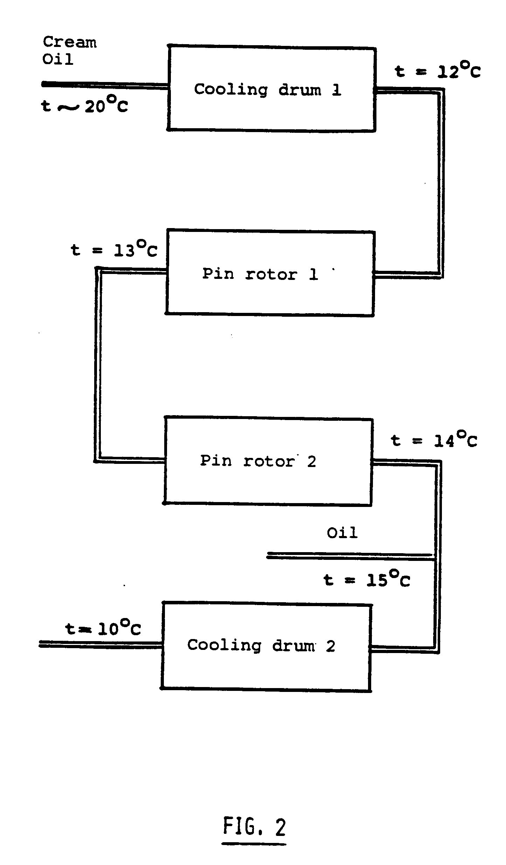

The phase reversal is carried through by making the mixture of cream and vegetable oil mixture pass a unit comprising scrape coolers and mixers of the type which are used when producing margarine. This unit is described further in Fig. 2. During the phase reversal the mixture is kept at a temperature of 11-15°C, with advantage 12-14°C. During the phase reversal the fat in the cream-vegetable oil mixture slowly crystallises. The cooling is adjusted to the crystallisation in such a way that the temperature of the mixture is kept uninfluenced of the heat released during the crystallisation. When a product has passed the unit for phase reversal it is with advantage brought to pass a resting tube, in which a possible after crystallisation takes place. After this the product is packaged.

In. Fig. 2 there is shown in more detail an embodiment of a unit in which the phase reversal may take place.

3

EP 0 366 774 B1

This unit consists of two cooling drums and two pin rotors. After the cool storage the concentrated cream is mixed with the largest part (70-90%) of the vegetable oil. Salt and aroma substances are also added. The mixture is brought to pass a cooling drum, in which the temperature is lowered to 12°C, and a first and second pin rotor. The speed of the cooling drum and the pin rotor is kept low such that the product should not be overworked. When the product has passed the second pin rotor it is mixed with the remaining amount of cooled oil (10-30%) and is brought to pass the second cooling drum.

By adding the oil in two steps the product becomes softer and the oil is used in a maximal way. If the whole amount of oil is added at once, oil drops may remain in the water phase.

According to the method of the invention products may be obtained with a varying mixture of fat, see the table below.

| Amount of vegetable oil in the total amount of fat in the product | Fat content in the cream | Relation vegetable oil/cream |
|---|---|---|
| % | % | % |
| 25 | 75 | 20/80 |
| 30 | 73.5 | 24/76 |
| 35 | 72 | 28/72 |
| 40 | 70.5 | 32/68 |
| 45 | 68.5 | 36/64 |
| 50 | 66.5 | 40/60 |

The concentration of the cream depends on the desired amount of the vegetable fat in the end product. If one desires a low content of vegetable oil the cream is concentrated to a higher degree than if more vegetable oil is to be used.

The costs for production of a fast product with 80% fat consisting of 25% vegetable oil and 75% milk fat produced in a conventional manner are comparable to the costs for production of a corresponding product in the manner according to the invention.

When using the traditional technique 1.2% of the fat is lost with the butter milk. According to the method of the invention only 0.15% fat is lost in the skim milk. If 4 millions kg/year are produced the difference in fat losses is 34.5 tons of butter fat, which with a butter fat price of 27 SEK/kg gives a saving of 930.000 SEK, when using the method according to the invention.

In a product produced according to the method of the invention the amount of vegetable oil may be increased from 25 to 30%, which also gives a saving in the million class, since vegetable oil is cheaper than milk fat.

**Claims**

1. Method for production of a fat product based on milk fat, wherein cream is concentrated to a fat content of 60 to 85% fat, at a temperature of 50 to 70°C, the concentrated cream is cooled to a temperature of 15 to 30°C, the cooled concentrated cream being stored for such a long time that the milk fat starts to crystalize, vegetable oil in an amount calculated to at least 25% of the amount of fat in the end product is added to the cooled concentrated cream, and phase reversal is carried out at a temperature of 8 to 15°C and is achieved without churning by cream and vegetable oil mixture being cooled in at least two steps with gentle working between the cooling steps, the entire mixture being converted into fat product which is packaged.

2. A method according to claim 1, wherein the cream is concentrated to a fat content of 70 to 85 % fat.

3. A method according to claim 1 or 2, wherein the concentrated cream is cooled to a temperature of 18 to 24°C.

4

4. Method according to claim 1, 2 or 3, wherein the maximal amount of vegetable oil is 50 % of the total amount of fat in the end product.

5. Method according to any one of claims 1 to 4, wherein the addition of vegetable oil takes place in two steps.

6. Method according to claim 5, wherein 70-90 % of the vegetable oil is added in the first step and 10-30 % in the second step.

7. A plant for production of a fat product based on milk by the method of claim 1, consisting of means for concentrating cream, a cooler to cool the concentrated cream to a temperature of 15-30°C, a tank for receiving the concentrated cream from the cooler and storing the concentrated cream, means for conducting concentrated cream from the tank to a device for mixing with the concentrated cream vegetable oils, salt and aroma substances, and a phase reversal unit consisting of first and second means for cooling the mixture, and means for gently working the mixture between the first and second cooling means, and a packaging plant.

8. A plant according to claim 7, wherein the first and second cooling means each comprises one or more cooling cylinders, and the means for working the mixture comprises one or more pin rotors.

9. A plant according to claim 7 or 8, wherein means are provided for addition of vegetable oil on the upstream side of the second cooling means.

**Patentansprüche**

1. Verfahren zur Herstellung eines Fettprodukts auf Milchfettbasis, bei dem man Sahne bei einer Temperatur von 50 bis 75 °C auf einen Fettanteil von 60 bis 85 % konzentriert, die konzentrierte Sahne auf eine Temperatur von 15 bis 30 °C abkühlt, die gekühlte konzentrierte Sahne vorhält, bis das Milchfett zu kristallisieren beginnt, der gekühlten konzentrierten Sahne Pflanzenöl in einer Menge zugibt, die zu mindestens 25 % des Fettanteils im Endprodukt berechnet ist, und eine Phasenumkehr bei einer Temperatur von 8 bis 15 °C und ohne Buttern durchführt, indem man die Sahne-Pflanzenöl-Mischung in mindestens zwei Schritten bei sanftem Kneten zwischen den Kühlschritten kühlt, wobei die gesamte Mischung zum Fettprodukt umgewandelt und dieses abgepackt wird.

2. Verfahren nach Anspruch 1, bei dem man die Sahne auf einen Fettanteil von 70 bis 85 % konzentriert.

3. Verfahren nach Anspruch 1 oder 2, bei dem man die konzentrierte Sahne auf eine Temperatur von 18 bis 24 °C abkühlt.

4. Verfahren nach Anspruch 1, 2 oder 3, bei dem die Höchstmenge des Pflanzenöls 50 % des Gesamtfetts im Endprodukt beträgt.

5. Verfahren nach einem der Ansprüche 1 bis 4, bei dem die Zugabe des Pflanzenöls in zwei Schritten erfolgt.

6. Verfahren nach Anspruch 5, bei dm man 70 - 90 % des Pflanzenöls im ersten Schritt und 10 - 30 % im zweiten Schritt zugibt.

7. Anlage zum Herstellen eines Fettprodukts auf Milchfettbasis nach dem Verfahren des Anspruchs 1, bestehend aus einer Einrichtung zum Konzentrieren von Sahne, einer Kühleinrichtung, um die konzentrierte Sahne auf eine Temperatur von 15 - 30 °C abzukühlen, einem Tank zur Aufnahme und zum Vorhalten der konzentrierten Sahne aus der Kühlvorrichtung, Mitteln zum Oberleiten der konzentrierten Sahne aus dem Tank an eine Vorrichtung zum Vermischen der konzentrierten Sahne mit Pflanzenölen, Salz und Aromastoffen, und einer Phasenumkehreinheit, die aus einer ersten und einer zweiten Einrichtung zum Kühlen der Mischung besteht, sowie aus Mitteln zum sanften Kneten der Mischung zuwischen der ersten und der zweiten Kühleinrichtung und einer Abpackeinrichtung.

8. Anlage nach Anspruch 7, bei der die erste und zweite Rühleinrichtung jeweils einen oder mehrere Kühlzylinder und die Einrichtung zum Kneten einen oder mehrere Stiftrotoren aufweisen.

**9.** Anlage nach Anspruch 7 oder 8, bei der Mittel zur Zugabe von Pflanzenöl stromaufwärts der zweiten Kühleinrichtung vorgesehen sind.

## Revendications

**1.** Procédé pour la production d'un produit gras à base des matières grasses du lait, dans lequel la crème est concentrée jusqu'à une teneur en matières grasses de 60 à 85 % de matières grasses, à une température de 50 à 70°C, la crème concentrée est refroidie à une température de 15 à 30°C, la crème concentrée refroidie étant stockée pendant une longue durée de façon à permettre aux matières grasses du lait d'entamer la cristallisation, de l'huile végétale dans une quantité calculée pour atteindre au moins 25 % de la quantité de matières grasses dans le produit final est ajoutée à la crème concentrée refroidie, une inversion de phase est effectuée à une température de 8 à 15°C et elle est réalisée sans barattage par de la crème et le mélange d'huile végétale est refroidi dans au moins deux étapes avec un traitement doux entre les étapes de refroidissement, la totalité du mélange étant convertie en produit gras qui est conditionné.

**2.** Procédé selon la revendication 1, dans lequel la crème est concentrée jusqu'à une teneur en matières grasses de 70 à 85 % de matières grasses.

**3.** Procédé selon la revendication 1 ou 2, dans lequel la crème concentrée est refroidie à une température de 18 à 24°C.

**4.** Procédé selon la revendication 1, 2 ou 3, dans lequel la quantité maximum d'huile végétale est de 50 % de la quantité totale de matières grasses dans le produit final.

**5.** Procédé selon l'une quelconque des revendications 1 à 4, dans lequel l'addition d'huile végétale s'effectue en deux étapes.

**6.** Procédé selon la revendication 5, dans lequel on ajoute 70-90 % de l'huile végétale dans la première étape et 10-30 % dans la seconde étape.

**7.** Installation pour la production d'un produit gras à base des matières grasses du lait par le procédé selon la revendication 1, constituée par des moyens destinés à concentrer la crème, un refroidisseur pour refroidir la crème concentrée à une température de 15-30°C, une cuve destinée à recevoir la crème concentrée en provenance du refroidisseur et à stocker la crème concentrée, des moyens pour conduire la crème concentrée de la cuve à un dispositif pour le mélange avec la crème concentrée, les huiles végétales, le sel et les substances aromatiques et une unité d'inversion de phase consistant en des premiers et seconds moyens destinés à refroidir le mélange et des moyens pour traiter doucement le mélange entre les premiers et seconds moyens de refroidissement et une installation de conditionnement.

**8.** Installation selon la revendication 7, dans laquelle les premiers et seconds moyens de refroidissement comprennent chacun un ou plusieurs cylindres de refroidissement et les moyens destinés à traiter le mélange comprennent un ou plusieurs rotors à broche.

**9.** Installation selon la revendication 7 ou 8, dans laquelle des moyens sont prévus pour l'addition d'huile végétale sur le côté amont des seconds moyens de refroidissement.

Cream

Concentration → Skim milk

Cooling

Cold storage

Vegetable oil
Salt
Aroma distillate →

Phase reversal ← Vegetable oil

Packing

FIG. 1

Cream
Oil

t ~ 20°C

Cooling drum 1

t = 12°C

t = 13°C

Pin rotor 1

Pin rotor 2

t = 14°C

Oil

t = 15°C

t = 10°C

Cooling drum 2

FIG. 2